# EUROPEAN PATENT SPECIFICATION

(11) **EP 4 748 341 B1**
(45) Date of publication and mention of the grant of the patent: **18.11.2026**
(21) Application number: 25167520.3
(22) Date of filing: 31.03.2025
(51) Int. Cl.: A61C 8/00

(54) **DENTAL IMPLANT WITH CONCAVE HEXAGONAL STRUCTURE**
ZAHNIMPLANTAT MIT KONKAVER SECHSECKIGER STRUKTUR
IMPLANT DENTAIRE À STRUCTURE HEXAGONALE CONCAVE

(30) Priority: 20.11.2024 CN 202411660936
(43) Date of publication of application: 27.05.2026
(73) Proprietor: Jiaxing Raoji Technology Co., Ltd., 314100 Jiaxing City Zhejiang (CN)
(72) Inventor: ZHAO, Zhe, Jiaxing City, 314100 (CN); WANG, Zhiwei, Jiaxing City, 314100 (CN); WANG, Weiqu, Jiaxing City, 314100 (CN); DING, Mengting, Jiaxing City, 314100 (CN); JIANG, Yanlin, Jiaxing City, 314100 (CN); QIN, Wei, Jiaxing City, 314100 (CN); JIAO, Ting, Jiaxing City, 314100 (CN)
(74) Representative: Chung, Hoi Kan

(56) References cited:
- WO-A1-2022/030706
- WO-A1-2023/144345
- CN-U- 204 361 278
- CN-U- 208 371 937

## Description

### Technical field

The present invention relates to dental implants, and more particularly to a dental implant with a concave hexagonal structure.

### Description of the related art

Currently, the implant materials used in oral clinical practice mainly include metals and their alloys, as well as ceramic materials. Among these, titanium has become the most commonly used implant material due to its excellent osseointegration ability, biocompatibility, and mechanical properties. However, titanium and titanium alloy implants have issues such as metal corrosion, ion release, allergic reactions, and aesthetic defects, which limit their clinical application scope. Zirconia ceramic materials exhibit excellent aesthetic properties, mechanical properties, and biocompatibility, fulfilling the demand for metal-free clinical treatments. They are now applied in restorations, orthodontic brackets, implant abutments, and dental implants. However, as a brittle material, once subjected to impact loads, it may form crack initiation points. Under stress concentration, cracks can rapidly propagate, leading to brittle fracture. On the other hand, solid metal implants and solid zirconia implants have elastic moduli far exceeding that of bone tissue, resulting in stress shielding at the bone-implant interface, which may lead to aseptic loosening of the implant and bone loss, ultimately causing implant failure.

The advantage of porous implants lies in reducing the stress shielding effect and bone loss, while their pores provide more sites for new bone colonization, guiding bone tissue ingrowth and achieving better osseointegration. Factors affecting osseointegration in porous implants are mainly related to porosity, pore size, and pore distribution. Conventional pore-forming methods, such as sintering loose powder compacts and adding pore-forming agents, often fail to precisely control the pore size and distribution. Consequently, after implantation in the human body, as new bone tissue grows and infiltrates these pores, which vary in size and are unevenly distributed, the consistent growth of bone tissue can lead to the implant's deviation and subsequently to implant failure. Additionally, in traditional preparation methods, it is difficult to fabricate complex structures using ceramics, thus failing to balance strength and weight.

WO2023/144345 discloses a medical implant comprising: a bone engaging portion comprising: an outer portion comprising or consisting of a conformal lattice structure; an inner portion comprising a cavity or a lattice structure; a helical thread extending around and recessed into or protruding from an outer surface of said bone engaging portion, said helical thread being configured to facilitate screwing of said bone engaging portion into bone.

### BRIEF DESCRIPTION OF THE DRAWINGS

Many aspects of the embodiments can be better understood with references to the following drawings. The components in the drawings are not necessarily drawn to scale, the emphasis instead being placed upon clearly illustrating the principles of the embodiments. Moreover, in the drawings, like reference numerals designate corresponding parts throughout two views.
FIG.1 is an explosion schematic view of a dental implant with concave hexagonal structure according to the present invention.
FIG.2 is a sectional schematic view of the dental implant with concave hexagonal structure of FIG.1.
FIG.3 is a partial enlarged schematic view of the dental implant with concave hexagonal structure of FIG.1 in A.
FIG.4 is a view of a concave hexagonal.

### DETAILED DESCRIPTION

The invention is as defined in the appended claims.

The present application is illustrated by way of example and not by way of limitaion in the figures of the accompanying drawings. It should be noted that references to "an" or "one" embodiment in this application arenot necessarily to the same embodiment, and such references mean at least one.

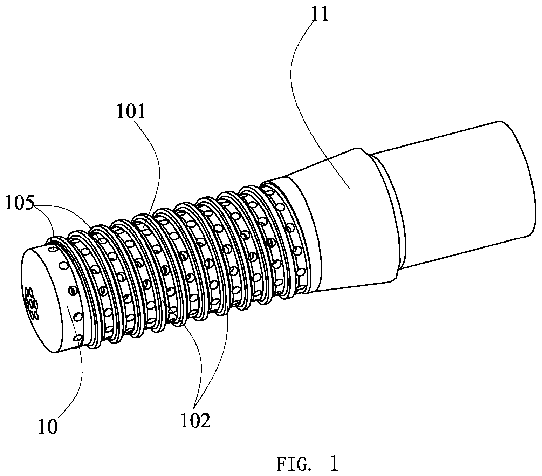

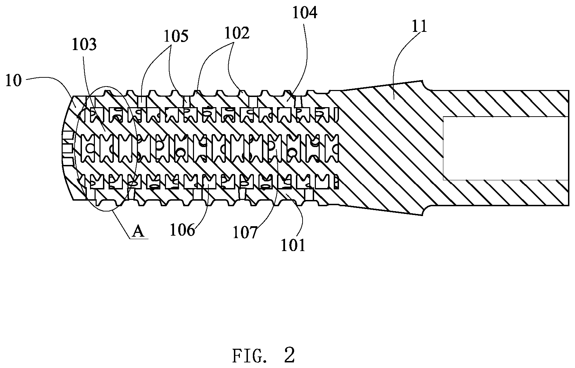

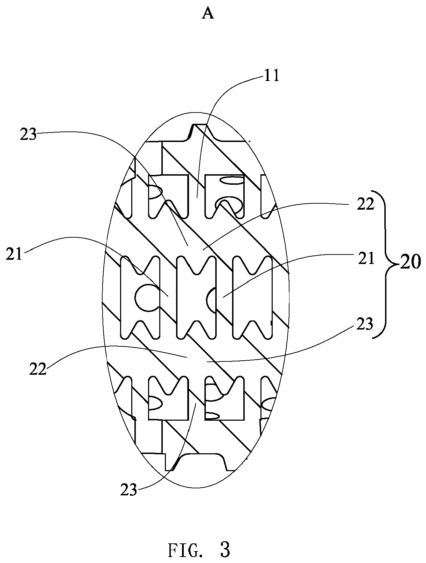

Referring to FIG. 1 to FIG. 4, a dental implant with concave hexagonal structure is shown in accordance with an examplary emobodiment of the present invention. The dental implant with concave hexagonal structure includes a threaded portion 10 and a transmucosal portion 11 connected to the threaded portion 10. The dental implant also includes other functional structures, such as an abutment disposed on the end of the transmucosal portion 11 opposite to the threaded portion 10, which are well-known to a person skilled in the art and will not be described in detail here. The entire dental implant can be 3D printed using zirconia ceramic, specifically by printing layer by layer along the axial direction of the implant. The 3D printing process allows the threaded portion 10, the transmucosal portion 11, the abutment, and other functional structures to be integrated into one piece, thereby reducing manufacturing costs and simplifying the dental implantation procedure.

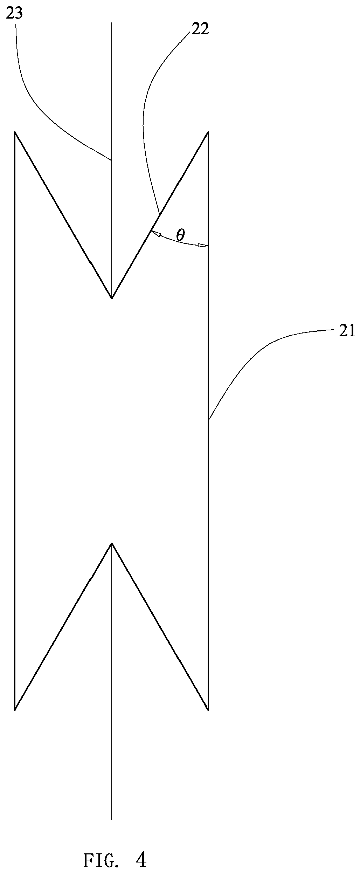

The threaded portion 10 includes a body 101, a thread 102 disposed around the body 101, a weight-reducing area 103 located inside the body 101, and a shell area 104 disposed outside the weight-reducing area 103. The body 101 is cylindrical with a diameter ranging from 0.1cm to 3cm, depending on actual needs. During use, the body 101 is screwed into the jawbone of the oral cavity, hence the thread 102 on the body 101. To secure the body 101 in the jawbone during use, a plurality of through-holes 105 are provided on the body 101. These through-holes 105 penetrate the shell area 104 and have a diameter ranging from 0.1mm to 2mm. After the threaded portion 10 is screwed into the jawbone, the jawbone tissue will grow into the through-holes 105 during the growth process, thereby achieving a secure fit. The thread 102 is helically arranged on the body 101 and can be a trapezoidal thread. The through-holes 105 are also located in the thread grooves of the thread 102 but not on the thread crests to ensure the strength of the thread crests. The shell area 104 has a certain thickness, which can be adjusted based on actual needs. In this embodiment, the radial thickness of the shell area 104 is between one-fifth and one-eighth of the maximum radial diameter of the body 101. In a cross-section along the axial direction of the body 101, the weight-reducing area 103 is formed by arranging multiple concave hexagonal unit cells 20 axially along the body 101. For ease of illustrating the concave hexagonal structure, Figure 4 shows a simplified illustration of a concave hexagon structure. Each concave hexagonal unit cell 20 includes two spaced-apart horizontal rods 21, four diagonal rods 22 located between the two horizontal rods 21, and two connecting rods 23 each connecting the intersection points of two diagonal rods 22. The horizontal rods 21 are arranged axially along the body 101 and are perpendicular to the axial direction of the body 101. In adjacent concave hexagonal unit cells 20, the adjacent horizontal rods 21 are coincident. Two of the four diagonal rods 22 are connected to one horizontal rod 21, and the other two are connected to the other horizontal rod 21. The four diagonal rods 22 are connected in pairs, forming a symmetrical structure with the line connecting the intersection points of the two pairs of connected diagonal rods 22 as the axis of symmetry. The angle between the diagonal rods 22 and the horizontal rods 21 is acute. One end of each of the two connecting rods 23 is connected to the intersection points of the diagonal rods 22, and the other end is connected to the inner side of the shell area 104. It can be understood that each concave hexagonal unit cell 20 is integrally formed through 3D printing, and each concave hexagonal unit cell 20 is also integrally formed with the shell area 104 through 3D printing.

By the arrangement of the concave hexagonal unit cells 20, the weight-reducing area 103 forms a central hollow region 106 and two side hollow regions 107 symmetrically disposed on both sides of the central hollow region 106. The central hollow region 106 is enclosed by the horizontal rods 21 and diagonal rods 22, while the side hollow regions 107 are formed by the connecting rods 23, diagonal rods 22, and the inner side of the shell area 104.

The length h of the horizontal rod 21 is 0.1mm≤h≤4mm. If the length of the horizontal rod is less than 0.1mm, it will result in poor mechanical properties of the implant. If it exceeds 4mm, it will lead to poor biocompatibility of the implant. The length I of the inclined edge 22 is 0.1mm≤l≤4mm. If the inclined edge is less than 0.1mm, it will cause poor mechanical properties of the implant. If it exceeds 4mm, it will result in poor biocompatibility of the implant. The angle θ between the inclined edge 22 and the horizontal rod 21 is 1°≤θ≤89.9°. If the angle is less than 1°, it will lead to insufficient sintering density of the implant. If it exceeds 89.9°, it will cause poor toughness of the implant. The wall thickness t of the horizontal rod 21 and the inclined edge 22 is 0.1mm ≤t≤1mm. If the wall thickness is less than 0.1mm, it will result in poor mechanical properties of the implant. If it exceeds 1mm, it will lead to poor biocompatibility of the implant.

A blind hole is provided on the transmucosal portion 11, and the outer diameter of the transmucosal portion 11 can be set to 0.2mm to 6mm, and the inner diameter thereof can be set to 0.1mm to 5mm.

As described above, the dental implant with concave hexagonal structure divides the thread portion 10 into the shell region 104 and the weight-reducing region 103 accommodated therein. And the weight-reducing region 103 is formed by arranging multiple concave hexagonal unit cells 20 along the axial direction of the body 101. The horizontal rods 21 are arranged along the axial direction of the body 101 and are perpendicular to the axial direction of the body 101. Among the four inclined rods 22, two thereof are connected respectively, forming a symmetrical structure with the line connecting the two intersection points of the pairwise connected inclined rods 22 as the axis of symmetry. The angle between the inclined rod 22 and the horizontal rod 21 is an acute angle. One end of the two connecting rods 23 is connected to the two intersection points of the inclined rods 22, respectively, and the other end is connected to the inner side of the shell region 104. By the structural arrangement of the concave hexagonal unit cell 20, more space can be created in the weight-reducing region 103 without reducing its strength, thereby minimizing the weight of the dental implant.

While the disclosure has been described by way of example and in terms of exemplary embodiment, it is to be understood that the disclosures is not limited thereto. To the contrary, it is intended to lamp shade various modifications and similar arrangements (as would be apparent to those skilled in the art). Therefore, the scope of the appended claims should be accorded the broadest interpretation so as to encompass all such modifications and similar arrangements.

## Claims

1. A dental implants with concave hexagonal structure, comprising:
a threaded portion (10), the threaded portion (10) comprising a body(101), a thread (102) disposed around the body (101), a weight-reducing area (103) located inside the body (101), and a shell area (104) disposed outside the weight-reducing area (103), in a cross-section along the axial direction of the body (101), the weight-reducing area (103) being formed by arranging multiple concave hexagonal unit cells (20) axially along the body (101);
each concave hexagonal unit cell (20) comprising two spaced-apart horizontal rods (21), four diagonal rods (22) located between the two horizontal rods (21), and two connecting rods (23) each connecting the intersection points of two diagonal rods (22), the horizontal rods (21) being arranged axially along the body (101) and being perpendicular to the axial direction of the body (101), two of the four diagonal rods (22) being connected to one horizontal rod (21), and the other two being connected to the other horizontal rod (21), the four diagonal rods (22) being connected in pairs, forming a symmetrical structure with the line connecting the intersection points of the two pairs of connected diagonal rods (22) as the axis of symmetry, the angle between the diagonal rods (22) and the horizontal rods (21) being acute, one end of each of the two connecting rods (23) being connected to the intersection points of the diagonal rods (22), and the other end being connected to the inner side of the shell area (104).

2. The dental implants with concave hexagonal structure as claimed in claim 1, wherein the body (101) is cylindrical with a diameter ranging from 0.1cm to 3cm, a plurality of through-holes (105) are provided on the body (101), these through-holes (105) penetrating the shell area (104) and have a diameter ranging from 0.1mm to 2mm.

3. The dental implants with concave hexagonal structure as claimed in claim 2, wherein the radial thickness of the shell area (104) is between one-fifth and one-eighth of the maximum radial diameter of the body (101).

4. The dental implants with concave hexagonal structure as claimed in claim 2, wherein the thread (102) is helically arranged on the body (101) and is a trapezoidal thread, the through-holes (105) are also located in the thread grooves of the thread (102) but not on the thread crests to ensure the strength of the thread crests.

5. The dental implants with concave hexagonal structure as claimed in claim 1, wherein in adjacent concave hexagonal unit cells (20), the adjacent horizontal rods (21) are coincident.

6. The dental implants with concave hexagonal structure as claimed in claim 1, wherein the weight-reducing area (103) forms a central hollow region (106) and two side hollow regions (107) symmetrically disposed on both sides of the central hollow region (106), the central hollow region (106) is enclosed by the horizontal rods (21) and the diagonal rods (22), while the side hollow regions (107) are formed by the connecting rods (23), the diagonal rods (22), and the inner side of the shell area (104).

7. The dental implants with concave hexagonal structure as claimed in claim 1, wherein the length h of the horizontal rod (21) is 0.1mm≤h≤4mm.

8. The dental implants with concave hexagonal structure as claimed in claim 1, wherein the length l of the inclined edge (22) is 0.1mm≤l≤4mm.

9. The dental implants with concave hexagonal structure as claimed in claim 1, wherein the angle θ between the inclined edge (22) and the horizontal rod (21) is 1°≤θ≤89.9°.

10. The dental implants with concave hexagonal structure as claimed in claim 1, wherein the wall thickness t of the horizontal rod (21) and the inclined edge (22) is 0.1mm ≤t≤1mm.

## Patentansprüche

1. Zahnimplantat mit konkav-sechseckiger Struktur, umfassend:
einen Gewindeabschnitt (10), wobei der Gewindeabschnitt (10) einen Körper (101), ein um den Körper (101) herum befindliches Gewinde (102), einen im Inneren des Körpers (101) gelegenen Gewichtsreduzierungsbereich (103) und einen außerhalb des Gewichtsreduzierungsbereichs (103) befindlichen Schalenbereich (104) umfasst, wobei in einem Längsschnitt durch den Körper (101) der Gewichtsreduzierungsbereich (103) durch axiales Anordnen mehrerer konkav-sechseckiger Einheitszellen (20) entlang des Körpers (101) gebildet ist;
wobei jede konkav-sechseckige Einheitszelle (20) zwei voneinander beabstandete Horizontalstäbe (21), vier zwischen den beiden Horizontalstäben (21) gelegene Diagonalstäbe (22) und zwei jeweils die Schnittpunkte von zwei Diagonalstäben (22) verbindende Verbindungsstäbe (23) umfasst, wobei die Horizontalstäbe (21) axial entlang des Körpers (101) angeordnet sind und senkrecht zur Axialrichtung des Körpers (101) stehen, wobei zwei der vier Diagonalstäbe (22) mit einem Horizontalstab (21) und die anderen zwei mit dem anderen Horizontalstab (21) verbunden sind, wobei die vier Diagonalstäbe (22) paarweise miteinander verbunden sind und eine symmetrische Struktur bilden, deren Symmetrieachse die Verbindungslinie der Schnittpunkte der beiden Paare verbundener Diagonalstäbe (22) ist, wobei der Winkel zwischen den Diagonalstäben (22) und den Horizontalstäben (21) spitz ist und wobei ein Ende jedes der beiden Verbindungsstäbe (23) mit den Schnittpunkten der Diagonalstäbe (22) verbunden ist und das andere Ende mit der Innenseite des Schalenbereichs (104) verbunden ist.

2. Zahnimplantat mit konkav-sechseckiger Struktur nach Anspruch 1, wobei der Körper (101) zylindrisch ist und einen Durchmesser von 0,1 cm bis 3 cm aufweist, wobei eine Mehrzahl von Durchgangslöchern (105) am Körper (101) vorgesehen ist, wobei diese Durchgangslöcher (105) den Schalenbereich (104) durchdringen und einen Durchmesser von 0,1 mm bis 2 mm aufweisen.

3. Zahnimplantat mit konkav-sechseckiger Struktur nach Anspruch 2, wobei die radiale Dicke des Schalenbereichs (104) zwischen einem Fünftel und einem Achtel des maximalen radialen Durchmessers des Körpers (101) liegt.

4. Zahnimplantat mit konkav-sechseckiger Struktur nach Anspruch 2, wobei das Gewinde (102) schraubenlinienförmig auf dem Körper (101) angeordnet ist und ein Trapezgewinde ist, wobei die Durchgangslöcher (105) auch in den Gewindenuten des Gewindes (102), jedoch nicht auf den Gewindekämmen angeordnet sind, um die Festigkeit der Gewindekämme zu gewährleisten.

5. Zahnimplantat mit konkav-sechseckiger Struktur nach Anspruch 1, wobei bei benachbarten konkav-sechseckigen Einheitszellen (20) die benachbarten Horizontalstäbe (21) miteinander zusammenfallen.

6. Zahnimplantat mit konkav-sechseckiger Struktur nach Anspruch 1, wobei der Gewichtsreduzierungsbereich (103) einen zentralen Hohlraum (106) und zwei symmetrisch auf beiden Seiten des zentralen Hohlraums (106) befindliche seitliche Hohlräume (107) bildet, wobei der zentrale Hohlraum (106) von den Horizontalstäben (21) und den Diagonalstäben (22) umschlossen ist, während die seitlichen Hohlräume (107) von den Verbindungsstäben (23), den Diagonalstäben (22) und der Innenseite des Schalenbereichs (104) gebildet sind.

7. Zahnimplantat mit konkav-sechseckiger Struktur nach Anspruch 1, wobei für die Länge h des Horizontalstabs (21) gilt: 0,1 mm ≤ h ≤ 4 mm.

8. Zahnimplantat mit konkav-sechseckiger Struktur nach Anspruch 1, wobei für die Länge l der Schrägkante (22) gilt: 0,1 mm ≤ 1 ≤ 4 mm.

9. Zahnimplantat mit konkav-sechseckiger Struktur nach Anspruch 1, wobei für den Winkel θ zwischen der Schrägkante (22) und dem Horizontalstab (21) gilt: 1° ≤ θ ≤ 89,9°.

10. Zahnimplantat mit konkav-sechseckiger Struktur nach Anspruch 1, wobei für die Wandstärke t des Horizontalstabs (21) und der Schrägkante (22) gilt: 0,1 mm ≤ t ≤ 1 mm.

## Revendications

1. Implant dentaire à structure hexagonale concave, comprenant :
une partie filetée (10), la partie filetée (10) comprenant un corps (101), un filetage (102) disposé autour du corps (101), une zone d'allègement (103) située à l'intérieur du corps (101), et une zone d'enveloppe (104) disposée à l'extérieur de la zone d'allègement (103), dans une coupe longitudinale le long de la direction axiale du corps (101), la zone d'allègement (103) étant formée par répartition axiale d'une pluralité de cellules unitaires hexagonales concaves (20) le long du corps (101) ;
chaque cellule unitaire hexagonale concave (20) comprenant deux barreaux horizontaux espacés (21), quatre barreaux diagonaux (22) situés entre les deux barreaux horizontaux (21), et deux barreaux de liaison (23) reliant chacun les points d'intersection de deux barreaux diagonaux (22), les barreaux horizontaux (21) étant répartis axialement le long du corps (101) et étant perpendiculaires à la direction axiale du corps (101), deux des quatre barreaux diagonaux (22) étant reliés à un barreau horizontal (21), et les deux autres étant reliés à l'autre barreau horizontal (21), les quatre barreaux diagonaux (22) étant reliés par paires, formant une structure symétrique ayant pour axe de symétrie la ligne reliant les points d'intersection des deux paires de barreaux diagonaux (22) reliés, l'angle entre les barreaux diagonaux (22) et les barreaux horizontaux (21) étant aigu, une extrémité de chacun des deux barreaux de liaison (23) étant reliée aux points d'intersection des barreaux diagonaux (22), et l'autre extrémité étant reliée au côté intérieur de la zone d'enveloppe (104).

2. Implant dentaire à structure hexagonale concave selon la revendication 1, dans lequel le corps (101) est cylindrique avec un diamètre compris entre 0,1 cm et 3 cm, une pluralité de trous traversants (105) sont prévus sur le corps (101), ces trous traversants (105) pénétrant la zone d'enveloppe (104) et ayant un diamètre compris entre 0,1 mm et 2 mm.

3. Implant dentaire à structure hexagonale concave selon la revendication 2, dans lequel l'épaisseur radiale de la zone d'enveloppe (104) est comprise entre un cinquième et un huitième du diamètre maximal radial du corps (101).

4. Implant dentaire à structure hexagonale concave selon la revendication 2, dans lequel le filetage (102) est agencé en hélice sur le corps (101) et est un filetage trapézoïdal, les trous traversants (105) sont également situés dans les gorges du filetage (102) mais pas sur les crêtes du filetage afin d'assurer la résistance des crêtes du filetage.

5. Implant dentaire à structure hexagonale concave selon la revendication 1, dans lequel, dans des cellules unitaires hexagonales concaves (20) adjacentes, les barreaux horizontaux (21) adjacents coïncident.

6. Implant dentaire à structure hexagonale concave selon la revendication 1, dans lequel la zone d'allègement (103) forme une région creuse centrale (106) et deux régions creuses latérales (107) disposées symétriquement de part et d'autre de la région creuse centrale (106), la région creuse centrale (106) est délimitée par les barreaux horizontaux (21) et les barreaux diagonaux (22), tandis que les régions creuses latérales (107) sont formées par les barreaux de liaison (23), les barreaux diagonaux (22) et le côté intérieur de la zone d'enveloppe (104).

7. Implant dentaire à structure hexagonale concave selon la revendication 1, dans lequel la longueur h du barreau horizontal (21) est 0,1 mm ≤ h ≤ 4 mm.

8. Implant dentaire à structure hexagonale concave selon la revendication 1, dans lequel la longueur l du bord incliné (22) est 0,1 mm ≤ l ≤ 4 mm.

9. Implant dentaire à structure hexagonale concave selon la revendication 1, dans lequel l'angle θ entre le bord incliné (22) et le barreau horizontal (21) est 1° ≤ θ ≤ 89,9°.

10. Implant dentaire à structure hexagonale concave selon la revendication 1, dans lequel l'épaisseur de paroi t du barreau horizontal (21) et du bord incliné (22) est 0,1 mm ≤ t ≤ 1 mm.
